# EUROPÄISCHE PATENTSCHRIFT

(11) **EP 0 545 205 B1**
(45) Veröffentlichungstag und Bekanntmachung des Hinweises auf die Patenterteilung: **14.12.1994**
(21) Anmeldenummer: 92119922.0
(22) Anmeldetag: 23.11.1992
(51) Int. Cl.: C01G 37/00, C01G 45/00, C01G 3/00, C09C 1/00

(54) **Spinellschwarzpigmente auf Basis von Kupfer-Chrom-Mangan-Mischoxiden, Verfahren zu ihrer Herstellung sowie deren Verwendung**
Copper, chromium, manganese mixed oxides based spinel black pigments, process for their preparation and use thereof
Pigments noirs de structure spinelle à base d'un oxyde composite de cuivre de chrome et de manganèse, procédé de leur préparation de même que leur utilisation

(30) Priorität: 05.12.1991 DE 4140118
(43) Veröffentlichungstag der Anmeldung: 09.06.1993
(73) Patentinhaber: BAYER AG, 51368 Leverkusen (DE)
(72) Erfinder: Wussow, Klaus, Dr., W-5900 Siegen (DE); Kuske, Peter, Dr., W-4150 Krefeld (DE); Mansmann, Manfred, Dr., W-5090 Leverkusen 1 (DE); Messer, Dieter, Dr., W-5068 Odenthal (DE); Räde, Dieter, Dr., W-4150 Krefeld (DE)

(56) Entgegenhaltungen:
- DE-B- 1 296 073
- US-A- 2 248 021
- US-A- 2 309 173
- US-A- 4 205 996
- ULLMANNS ENCYKLOPÄDIE DER TECHNISCHEN CHEMIE Bd. 18, 1979, WEINHEIM Seiten 607- 608

## Beschreibung

Die vorliegende Erfindung betrifft Spinellschwarzpigmente auf Basis von Kupfer-Chrom-Mangan-Mischoxiden, Verfahren zu ihrer Herstellung sowie deren Verwendung.

Oxidische Mischphasenpigmente mit Spinellstruktur sind seit langem bekannt. Die Kristallstruktur des farblosen Minerals Spinell, MgAl₂O₄, bietet eine Vielzahl von Substitutionsmöglichkeiten des Magnesiums und Aluminiums, insbesondere durch farbgebende Übergangsmetalle, wie z.B. Vanadium, Chrom, Mangan, Eisen, Cobalt, Nickel und Kupfer, wobei Mischoxide der allgemeinen Formel AB₂O₄ mit verschiedensten Farbtönen resultieren [Ullmanns Encyklopädie der technischen Chemie, Verlag Chemie, Weinheim 1979, 4. Aufl., Bd. 18, S. 607-608]. Es sind auch Abweichungen von der idealen Stöchiometrie AB₂O₄ bekannt, die davon herrühren, daß die Spinellstruktur gewisse Phasenbreiten zuläßt.

Üblicherweise verläuft die Herstellung der Mischphasenpigmente in der Weise, daß eine innige Mischung der Metalloxide oder von Verbindungen, die beim Erhitzen die Metalloxide bilden, einer Festkörperreaktion bei Temperaturen zwischen 800 und 1400 °C unterworfen und anschließend gemahlen wird.

Besondere technische Bedeutung haben Schwarzpigmente auf der Basis des Kupfer-Chrom-Spinells CuCr₂O₄ erlangt. Sie werden häufig durch Einbau von Eisen und/oder Mangan in das Spinellgitter modifiziert [P.A. Lewis, Pigment Handbook, John Wiley & Sons, New York 1988, 2. Aufl., Bd. 1, S. 777-784].

Aufgrund ihrer ausgezeichneten Temperatur-, Licht-, Wetter- und Chemikalienbeständigkeit eignen sich die Spinellschwarzpigmente besonders für die Pigmentierung von hochhitzebeständigen Locken (z.B. auf Basis von Siliconharzen) und Coil-Coat-Lacken, wobei sie z.T. in Abmischung mit Weißpigmenten zur Einstellung verschiedenster Grautöne eingesetzt werden. Sie eignen sich aber auch für die Einfärbung von Kunststoffen, Email und keramischen Glasuren. Gegenüber Rußpigmenten weisen sie ein günstigeres Dispergierverhalten auf, besitzen jedoch eine deutlich geringere Farbstärke. Unter Farbstärke ist dabei nach DIN 55986 das Maß für die Fähigkeit eines Farbmittels (z.B. Farbpigment) zu verstehen, aufgrund seines Absorptionsvermögens farbgebend auf andere Stoffe (z.B. Weißpigment) zu wirken.

Die US-A 2 248 021 beschreibt keramische Farbmittel bestehend aus Oxiden des Kupfers und Chroms mit einem molaren Verhältnis von Chrom zu Kupfer wie 1,5:1 bis 2,5:1, die einen Anteil von bis zu 5 % Mangandioxid enthalten können. US-A 2 309 173 offenbart Schwarzpigmente, die dadurch erhalten werden, daß man einer Mischung aus Kupferoxid und Chromoxid Metalloxide des Eisens, Nickels, Cobalts, Mangans, Molybdäns, Wolframs, Vanadiums und/oder Urans in Mengen bis zu 15 % des Metalloxids zugibt und diese Mischung anschließend bei Temperaturen zwischen 800 und 1100 °C calciniert.

Nachteile dieser Pigmente sind ihr graustichiger Farbton und ihre geringe Farbstärke.

Die Aufgabe der vorliegenden Erfindung ist es, Schwarzpigmente mit Spinellstruktur auf Basis von Kupfer-Chrom-Mangan-Mischoxiden zur Verfügung zu stellen, die die oben genannten Nachteile nicht aufweisen.

Es wurde nun gefunden, daß diese Aufgabe in besonderer Weise mit Schwarzpigmenten auf Basis von Kupfer-Chrom-Mangan-Mischoxiden mit Spinellstruktur gelöst werden kann, die einen Kupfergehalt von 13 bis 25 Gew.-%, bevorzugt 15 bis 22 Gew.-%. einen Chromgehalt von 22 bis 41 Gew.-%, bevorzugt 25 bis 36 Gew.-% und einen Mangangehalt von 7 bis 36 Gew.-%, bevorzugt 14 bis 30 Gew.-%, aufweisen, die dadurch gekennzeichnet sind, daß sie einen Helligkeitswert L* im CIELAB-Farbsystem, gemessen an Lackeinfärbungen der Schwarzpigmente nach Abmischung mit der fünffachen Menge an Titandioxid-Weißpigment, zwischen 57 und 61 aufweisen.

Die erfindungsgemäßen Schwarzpigmente zeichnen sich dadurch aus, daß sie in der Aufhellung mit einem Weißpigment deutlich niedrigere Helligkeiten L* aufweisen als Pigmente, die auf konventionelle Weise hergestellt wurden. Die Helligkeit L* kann dabei als Maß für die Farbstärke der Pigmente dienen. Ein niedriger L*-Wert zeigt an, daß das Schwarzpigment ein großes Absorptionsvermögen für sichtbares Licht hat und damit in besonderem Maße in der Lage ist, farbgebend auf andere Stoffe zu wirken.

Die erfindungsgemäßen Pigmente sind erhältlich durch Glühen einer Mischung aus Oxiden bzw. beim Erhitzen oxidbildenden Verbindungen, wie z.B. Hydroxide, Carbonate, des Kupfers, des Chroms und Mangans sowie ggf. unter Zusatz von Mineralisatoren, z.B. Natriumborat, Borsäure oder Boroxid, wobei es sich bei der manganliefernden Komponente um Mn₃O₄ handelt. Dies muß überraschen, als die Verwendung reaktiver Oxide bzw. oxidbildender Manganverbindungen mit hoher spezifischer Oberfläche, wie sie üblicherweise bei der Pigmentherstellung eingesetzt werden, z.B. natürliches MnO₂ (Braunstein), synthetisches MnO₂ (Batteriequalität) oder MnCO₃, hingegen zu nachteiligen Pigmentqualitäten führt, d.h. zu einer geringen Farbstärke und einem graustichigen Farbton.

Das Mn₃O₄ wird in bekannter weise durch Oxidation von Mangan(II)-Verbindungen aus Lösung hergestellt [Gmelins Handbuch der anorganischen Chemie, Verlag Chemie, Weinheim 1973, 8. Aufl., Bd. 56, Tl. C1, S. 77 und darin zitierte Literatur].

Gegenstand dieser Erfindung ist auch ein Verfahren zur Herstellung der erfindungsgemäßen Schwarzpigmente. Hierbei handelt es sich um ein Verfahren zur Herstellung von Spinellschwarzpigmenten durch Glühen einer Mischung aus Oxiden, Hydroxiden und/oder Carbonaten des Kupfers, Chroms und Mangans, ggf. unter Zusatz von Mineralisatoren, bei Temperaturen zwischen 750 und 900 °C und Mahlen der Ofenprodukte, ggf. Waschen und Trocknen, wobei als manganliefernde Komponente Mn₃O₄ eingesetzt wird.

Die Herstellung der erfindungsgemäßen Pigmentrohstoffmischung erfolgt zweckmäßigerweise in wäßriger Suspension, da hierdurch eine Trocknung und Mahlung des naß anfallenden Mn₃O₄ überflüssig wird. Es ist jedoch auch möglich, das Mn₃O₄ zu trocknen und zu mahlen und dann mit den anderen Ausgangsstoffen in trockenem Zustand, z.B. in einem Intensivmischer, zu vermischen. Im Falle der bevorzugten Naßmischung wird der gewaschene Filterkuchen in Wasser resuspendiert. Nach Zugabe der Kupfer- und Chrom-Komponente wird unter intensivem Rühren eine homogene Suspension hergestellt. Hierfür eignen sich insbesondere Mischaggregate, die nach dem Rotor-Stator-Prinzip arbeiten. Die Rohstoffsuspension wird anschließend entwässert, wobei Filterpressen, Dekantierzentrifugen o.ä. Verwendung finden können. An die Entwässerung des Filterkuchens kann sich ggf. eine Trocknung nach üblichen Verfahren anschließen. Hierzu werden bevorzugt Heißgastrockner, wie Sprühtrockner oder Spinflashtrockner, und Kontakttrockner verwendet. Hierauf wird der Filterkuchen oder das Trockengut calciniert. Für die Calcinierung eignen sich sowohl direkt als auch indirekt beheizte Öfen, so z.B. kontinuierlich betriebene Drehrohröfen, Ringherdöfen, Durchschuböfen, Tunnelöfen oder diskontinuierlich betriebene Drehtrommelöfen und Kammeröfen. Für die Bildung des Kupfer-Chrom-Mangan-Mischoxids haben sich Glühtemperaturen von 750 °C bis 900 °C als günstig herausgestellt. Die Reaktionszeiten sind naturgemäß bei niedriger Temperatur länger als bei höherer Temperatur und liegen zwischen 8 Stunden und 30 Minuten.

An die Calcination schließt sich die Zerkleinerung des Ofenklinkers auf Pigmentfeinheit an. Die Mahlung kann sowohl trocken als auch in wäßriger Suspension durchgeführt werden. Für die Trockenmahlung eignen sich z.B. Strahlmühlen. Aus technischen Gründen wird jedoch die Naßmahlung, z.B. mittels Rührwerkskugelmühlen, ggf. nach Vorzerkleinerung, bevorzugt. Die Vorzerkleinerung kann z.B. in Kugelmühlen erfolgen.

Nach der Naßmahlung wird die Pigmentsuspension entwässert, gewaschen und getrocknet. Zuletzt werden die bei der Trocknung entstandenen Trocknungsagglomerate durch eine Trockenmahlung zerstört. Hierfür können z.B. Prallteller-, Stift- oder Strahlmühlen eingesetzt werden.

Die erfindungsgemäßen Pigmente sind durch Helligkeitswerte L* im Bereich zwischen 57 und 61, gemessen an Lackeinfärbungen nach Abmischung mit der fünffachen Gewichtsmenge an TiO₂-Weißpigment, charakterisiert. Weiterhin zeichnen sich die erfindungsgemäßen Pigmente durch eine niedrige Helligkeit im Purton aus.

Gegenstand der Erfindung ist auch die Verwendung der Schwarzpigmente zur Pigmentierung von Lacken, zur Einfärbung von Kunststoffen, Email und sonstigen niedrig schmelzenden Glasflüssen.

Im folgenden wird die Erfindung beispielhaft erläutert, ohne daß hierdurch eine Einschränkung der Erfindung zu sehen ist.

### Beispiele

### Herstellung von Mn₃O₄:

In einem beheizbaren Rührbehälter mit Gaseinleitung werden 2 m³ MnSO₄-Lösung einer Konzentration von 600 g MnSO ₄·H₂O/l mit 7,5 m³ Wasser verdünnt. Durch Zugabe von 395 l 45 %iger Natronlauge wird ein pH-Wert von 11 eingestellt. Die entstandene Suspension von Mn(OH)₂ wird anschließend auf 80 °C erhitzt und 6 Stunden mit 70 m³ Luft pro Stunde begast. Der entstandene Feststoff wird abfiltriert und gewaschen. Nach röntgendiffraktometrischer Analyse handelt es sich um phasenreines Mn₃O₄ mit Hausmannit-Struktur. Der Mangangehalt des feuchten Filterkuchens beträgt 40 %. Die spezifische Oberfläche (gemessen nach der BET-N₂-1-Punkt-Methode-DIN 66131) des bei 130 °C getrockneten Materials beträgt 10 m²/g.

### Beispiel 1

660 kg des nach obiger Beschreibung hergestellten Mn₃O₄-Filterkuchens werden mit 365 kg Cr₂O₃ GN (Produkt der Bayer AG), 332 kg CuCO₃·Cu(OH)₂·xH₂O (46 % Cu, Produkt der Th. Goldschmidt AG), 9 kg Na₂B₄O₇·5H₂O und 1000 l Wasser mit Hilfe eines Rotor-Stator-Mischers zu einer homogenen Suspension verarbeitet. Die Mischung wird getrocknet und 6 Stunden bei 800 °C in einem Drehtrommelofen in oxidierender Atmosphäre calciniert. Der Ofenklinker wird naß in einer Kugelmühle vorzerkleinert und anschließend über eine Perlmühlenkaskade feingemahlen. Nach Trocknung und Desagglomeration wird ein intensiv schwarzes, farbstarkes Pigment erhalten (s. Tab. 1).

Die Zusammensetzung des Pigmentes beträgt 16,5 % Cu, 27,0 % Cr und 28,6 % Mn. Nach röntgendiffraktometrischer Analyse besitzt das Pigment Spinellstruktur.

### Beispiel 2

Es wird wie in Beispiel 1 vorgegangen. Als Kupferkomponente wird jedoch CuO in einer Menge von 191 kg eingesetzt. Es wird ebenfalls ein tiefschwarzes, farbstarkes Pigment (s. Tab. 1) mit Spinellstruktur erhalten. Die Zusammensetzung des Pigments entspricht der des Produktes aus Beispiel 1.

### Beispiel 3

165,8 g CuCO₃·Cu(OH)₂·xH₂O (46 % Cu), 182,4 g Cr₂O₃ (Chromoxid GN, Produkt der Bayer AG), 330,0 g des nach obiger Beschreibung hergestellten Mn₃O₄, 4 g Na₂B₄O₇·5H₂O und 600 ml Wasser werden mit Hilfe eines Rotor-Stator-Mischers homogen gemischt.

Die Suspension wird filtriert, getrocknet und anschließend 1 Stunde im Laborkammerofen bei 800 °C geglüht. 80 g des Ofenproduktes werden mit 140 ml Wasser 30 Minuten in einer Laborkugelmühle vorzerkleinert. Die erhaltene Suspension wird 10 Minuten in einer Laborrührwerkskugelmühle mit 320 ml, entsprechend 600 g Mahlkörpern (mittlerer Durchmesser 0,7 mm) bei 2000 UpM gerührt. Die Mahlkörper werden abgetrennt, die Suspension filtriert, gewaschen, getrocknet und desagglomeriert. Man erhält ein tiefschwarzes, farbstarkes Pigment (s. Tab. 1) mit Spinellstruktur, dessen Zusammensetzung der des Produkts aus Beispiel 1 vergleichbar ist.

### Beispiel 4

127,3 g CuO, 243,4 g Cr₂O₃ (Chromoxid GN, Produkt der Bayer AG), 164,8 g des nach obiger Beschreibung hergestellten Mn₃O₄-Filterkuchens, 4 g H₃BO₃ und 600 ml Wasser werden mit Hilfe eines Rotor-Stator-Mischers homogen gemischt. Anschließend wird wie im Beispiel 3 beschrieben vorgegangen. Man erhält ein intensiv schwarzes, farbstarkes Pigment (s. Tab. 1) mit Spinellstruktur folgender Zusammensetzung: 22,0 % Cu, 36,0 % Cr und 14,3 % Mn.

### Beispiel 5

111,4 g CuO, 212,8 g Cr₂O₃ (Chromoxid GN, Produkt der Bayer AG), 247,2 g des nach obiger Beschreibung hergestellten Mn₃O₄-Filterkuchens, 4 g H₃BO₃ und 600 ml Wasser werden mit Hilfe eines Rotor-Stator-Mischers homogen gemischt. Anschließend wird wie im Beispiel 3 beschrieben vorgegangen. Man erhält ein tiefschwarzes, farbstarkes Pigment (s. Tab. 1) mit Spinellstruktur folgender Zusammensetzung: 19,3 % Cu, 31,6 % Cr und 21,4 % Mn.

### Beispiel 6

Es wird entsprechend Beispiel 3 vorgegangen. Als Mangan-Komponente wird jedoch ein natürliches Mangandioxid (52 % Mn, 24 m²/g) des Handels in einer Menge von 253,6 g eingesetzt. Das erhaltene Pigment besitzt eine dem Produkt aus Beispiel 3 vergleichbare chemische Zusammensetzung, ist jedoch graustichig und besitzt merklich weniger Färbekraft als die Pigmente der Beispiele 1 bis 5, was sich in einem hohen Helligkeitswert L* äußert. Es entspricht damit herkömmlichen technischen Spinellschwarzpigmenten auf Basis von Kupfer-Chrom-Mangan-Mischoxiden (s. Tab. 1).

### Beispiel 7 (Vergleichsbeispiel)

Es wird entsprechend Beispiel 3 vorgegangen. Als Mangan-Komponente wird jedoch ein feinteiliges Mangancarbonat (44,5 % Mn, 30 m²/g) in einer Menge von 296,3 g eingesetzt. Das Pigment besitzt eine dem Produkt aus Beispiel 3 vergleichbare chemische Zusammensetzung, ist jedoch graustichig und besitzt merklich weniger Farbstärke als die Pigmente der Beispiele 1 bis 5. Es entspricht damit herkömmlichen technischen Pigmenten (s. Tab. 1).

### Beispiel 8 (Vergleichsbeispiel)

Es wird entsprechend Beispiel 3 vorgegangen. Als Mangan-Komponente wird jedoch ein aktives MnO₂, wie es zur Herstellung von Trockenbatterien verwendet wird, mit einem Mangangehalt von 60 % und einer spezifischen Oberfläche von 100 m²/g in einer Menge von 219,8 g eingesetzt. Das so hergestellte Pigment besitzt eine dem Produkt aus Beispiel 3 vergleichbare chemische Zusammensetzung, weist jedoch einen starken Graustich auf und ist farbschwach (s. Tab. 1).

Die Pigmente wurden mit Hilfe einer Tellerfarbenausreibmaschine in einen lufttrockenden Lack (Alkydal F 48, Produkt der Bayer AG) eingearbeitet. Die Pigmentvolumenkonzentration betrug 10 %. Der pigmentierte Lack wurde auf weißem, lackiertem Karton in deckender Schicht aufgezogen. Auf diese Weise erhält man den Purton des Pigments.

Zur Beurteilung der Farbstärke wurde eine Weißaufhellung des Pigments mit einem Titandioxid-Pigment (R-KB-2, Produkt der Bayer AG) im Gewichtsverhältnis 1:5 wie oben beschrieben angefertigt.

Die Farbmessung der getrockneten Lackanreibung erfolgte nach DIN 5033 mit Hilfe eines Spektralfarbmeßgerätes (Normlichtart C, Meßgeometrie d/8, 2° Normalbeobachter). Für die Auswertung wurde das CIELAB-Farbsystem nach DIN 6174 herangezogen.

Beispielhaft sind in Tab. 1 erfindungsgemäße Pigmente (Beispiele 1 bis 5) solchen Pigmenten, die auf sonst gleiche Weise, aber unter Einsatz anderer, für die Pigmentherstellung üblicher manganliefernder Ausgangsstoffe hergestellt wurden (Beispiele 6 bis 8) sowie herkömmlichen technischen Pigmenten gegenübergestellt.

Die erfindungsgemäßen Pigmente sind durch Helligkeitswerte L* im Bereich zwischen 57 und 61, gemessen an Lackeinfärbungen nach Abmischung mit der fünffachen Gewichtsmenge an TiO₂-Weißpigment, charakterisiert. Die L*-Werte herkömmlicher Pigmente liegen dagegen oberhalb von 62 Einheiten.

Weiterhin zeichnen sich die erfindungsgemäßen Pigmente durch eine niedrige Helligkeit im Purton aus.

**Tabelle 1**

| Pigment aus Beispiel | Helligkeit L* nach CIELAB der Weißabmischung (Gewichtsverhältnis 1:5) |
|---|---|
| 1 | 58,2 |
| 2 | 59,4 |
| 3 | 57,0 |
| 4 | 60,5 |
| 5 | 59,6 |
| 6 (Vergleichsbeispiel) | 62,4 |
| 7 (Vergleichsbeispiel) | 62,7 |
| 8 (Vergleichsbeispiel) | 62,5 |
| Technisches Pigment 1 *) | 63,5 |
| Technisches Pigment 2 *) | 62,5 |

| | |
|---|---|
| *) Beim technischen Pigment 1 handelt es sich um Black Nr. 101 der Firma Shepherd Color Company, USA, beim technischen Pigment 2 um Daipyroxide 9570 der Firma Dainichi Color & Chemicals Manufacturing, Japan. | |

## Patentansprüche

1. Schwarzpigmente mit Spinellstruktur auf Basis von Kupfer-Chrom-Mangan-Mischoxiden mit einem Kupfergehalt von 13 bis 25 Gew.-%, bevorzugt 15 bis 22 Gew.-%, einem Chromgehalt von 22 bis 41 Gew.-%, bevorzugt 25 bis 36 Gew.-% und einem Mangangehalt von 7 bis 36 Gew.-%, bevorzugt 14 bis 30 Gew.-%, dadurch gekennzeichnet, daß sie Helligkeitswerte L* im CIELAB-Farbsystem, gemessen an Lackeinfärbungen der Schwarzpigmente nach Abmischung mit der fünffachen Menge an Titandioxid-Weißpigment, zwischen 57 und 61 aufweisen.

2. Spinellschwarzpigmente gemäß Anspruch 1, erhältlich durch Glühen einer Mischung aus Oxiden, Hydroxiden und/oder Carbonaten des Kupfers, Chroms und Mangans, dadurch gekennzeichnet, daß als manganliefernde Komponente Mn₃O₄ eingesetzt wird.

3. Verfahren zur Herstellung von Spinellschwarzpigmenten durch Glühen einer Mischung aus Oxiden, Hydroxiden und/oder Carbonaten des Kupfers, Chroms und Mangans, ggf. unter Zusatz von Mineralisatoren, bei Temperaturen zwischen 750 und 900 °C und Mahlen der Ofenprodukte, ggf. Waschen und Trocknen, dadurch gekennzeichnet, daß als manganliefernde Komponente Mn₃O₄ eingesetzt wird.

4. Verfahren gemäß Anspruch 3, dadurch gekennzeichnet, daß das Mn₃O₄ durch Oxidation von Mangan(II)-Verbindungen aus Lösung hergestellt wird.

5. Verwendung der Spinellpigmente gemäß einem oder mehreren der Ansprüche 1 bis 4 zur Einfärbung von Lacken, Kunststoffen, Email und sonstigen niedrig schmelzenden Glasflüssen.

## Claims

1. Black pigments with spinel structure based on copper/chromium/manganese mixed oxides with a copper content of 13 to 25 wt.%, preferably 15 to 22 wt.%, a chromium content of 22 to 41 wt.%, preferably 25 to 36 wt.% and a manganese content of 7 to 36 wt.%, preferably 14 to 30 wt.%, characterised in that they have luminosity values L* in the CIELAB colour system, measured on lacquer coloured with the black pigments after blending with 5 times their quantity of titanium dioxide white pigment, of between 57 and 61.

2. Spinel black pigments according to claim 1, obtainable by calcining a mixture of oxides, hydroxides and/or carbonates of copper, chromium and manganese, characterised in that Mn₃O₄ is used as the source of manganese.

3. Process for the production spinel black pigments by calcining a mixture of oxides, hydroxides and/or carbonates of copper, chromium and manganese, optionally with added mineralisers, at temperatures of between 750 and 900°C, and grinding the furnace products, optionally washing and drying them, characterised in that Mn₃O₄ is used as the source of manganese.

4. Process according to claim 3, characterised in that the Mn₃O₄ is produced by oxidising manganese(II) compounds from solution.

5. Use of the spinel pigments according to one or more of claims 1 to 4 to colour lacquers, plastics, enamel and other low-melting glass fluxes.

## Revendications

1. Pigments noirs à structure de spinelle à base d'oxydes mixtes de cuivre-chrome-manganèse ayant une teneur en cuivre de 13 à 25 % en poids, de préférence 15 à 22 % en poids, une teneur en chrome de 22 à 41 % en poids, de préférence 25 à 36 % en poids et une teneur en manganèse de 7 à 36 % en poids, de préférence 14 à 30 % en poids, caractérisés en ce qu'ils présentent des valeurs de brillance L* dans le système de couleurs CIELAB entre 57 et 61, mesurées sur des colorations de vernis des pigments noirs après mélange avec 5 fois leur poids de pigment blanc de dioxyde de titane.

2. Pigments noirs à structure de spinelle selon la revendication 1, qui peuvent être obtenus par calcination d'un mélange d'oxydes, d'hydroxydes et/ou de carbonates de cuivre, de chrome et de manganèse, caractérisés en ce qu'on utilise Mn₃O₄ comme composant fournissant le manganèse.

3. Procédé pour la préparation de pigments noirs à structure de spinelle par calcination d'un mélanges d'oxydes, d'hydroxydes et/ou de carbonates de cuivre, de chrome et de manganèse, éventuellement avec addition de minéralisateurs, à des températures entre 750 et 900°C et broyage des produits du four, éventuellement lavage et séchage, caractérisé en ce que l'on utilise Mn₃O₄ comme composant fournissant le manganèse.

4. Procédé selon la revendication 3, caractérisé en ce que le Mn₃O₄ est préparé en solution par oxydation de composés de manganèse (II).

5. Utilisation des pigments à structure de spinelle selon une ou plusieurs des revendications 1 à 4 pour la coloration de vernis, de matières plastiques, d'émail et d'autres fondants de bas point de fusion.
